(19) Europäisches Patentamt
European Patent Office
Office européen des brevets

(11) **EP 2 507 023 B1**

(12) **EUROPEAN PATENT SPECIFICATION**

(45) Date of publication and mention
of the grant of the patent:
**09.08.2023 Bulletin 2023/32**

(21) Application number: **09795569.4**

(22) Date of filing: **01.12.2009**

(51) International Patent Classification (IPC):
**B29B 17/00** *(2006.01)*     **B29C 43/00** *(2006.01)*

(52) Cooperative Patent Classification (CPC):
**B29B 17/0042; B29C 43/003;** B29K 2023/06;
B29K 2023/12; B29K 2033/08; B29K 2033/26;
B29K 2105/251; B29K 2105/26; B29L 2031/48;
B29L 2031/7178; Y02W 30/62

(86) International application number:
**PCT/NL2009/000241**

(87) International publication number:
**WO 2011/068399 (09.06.2011 Gazette 2011/23)**

(54) **METHOD FOR RECYCLING USED CLOTHES AND DOMESTIC TEXTILE**

RECYCLING-VERFAHREN FÜR GEBRAUCHTE KLEIDUNG UND HEIMTEXTILIEN

PROCÉDÉ DE RECYCLAGE DES VÊTEMENTS ET DES TEXTILES DOMESTIQUES USAGÉS

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**10.10.2012 Bulletin 2012/41**

(73) Proprietor: **VIVE TEXTILE RECYCLING Spolka
z.o.o.
25 663 Kielce (PL)**

(72) Inventor: **BINDER, Martin, Dave, Theodor
NL-3193 JK Hoogvliet (NL)**

(74) Representative: **Griebling, Onno
Octrooibureau Griebling BV
Sportweg 10
5037 AC Tilburg (NL)**

(56) References cited:
WO-A1-2009/148302     DE-A1- 19 612 548
JP-A- 2004 042 385     JP-A- 2005 082 802
US-A1- 2007 045 456

• **FRANKENBERG VON A: "VERWERTUNG VON
TEXTILEN TEPPICHABFALLEN", MELLIAND
TEXTILBERICHTE, DEUTSCHER FACHVERLAG,
FRANKFURT AM MAIN, DE, vol. 77, no. 10, 1
October 1996 (1996-10-01), pages 679-681,
XP000629618, ISSN: 0341-0781**
• **Postma Martine: "Identitex houdt textiel uit
verbrandingsoven", MVOnieuws, 23 November
2008 (2008-11-23), XP002630734, Retrieved from
the Internet:
URL:http://www.duurzaamnieuws.nl/mvo/insmv
o_spoton.rxml?id=31484&photo=231&title=Ide
ntitex%20houdt%20textiel%20uit%20verbrandi
ngsoven [retrieved on 2011-03-30]**

## Description

The present invention relates in general to recycling used clothing and domestic textile (towels, bed linens, etcetera). The method proposed by the present invention is however applicable with other starting materials.

It is known per se to collect used clothing and to recycle this to useful and commercially interesting products. This is happening at a large scale. Several commercial or charity institutions collect used clothing and domestic textile, such as the Salvation Army. A recycling company buys the collected goods from these collectors, wherein large companies are operating on European or even world scale. On a monthly basis, many millions of kilo's are involved. The used clothing comprises all types of products and raw materials, and processing thereof is largely an examination and sorting process, which may partly be automated but largely is manual labour: many hundreds of people are working with some companies operating in this area. The used clothing comprises for instance shoes, trousers, dresses, sweaters, shirts, etcetera. A sorting step comprises for instance sorting of still usable parts of clothing, for instance still usable shoes, still usable trousers, etcetera, and these can be sold as second hand clothes. Clothes which are no longer usable may be dissected and sorted on the basis of component material. For instance, the buttons and zippers of shirts and trousers may be separated from the textile material. The textile material may be distinguished on the basis of the type of material: there is textile from vegetable material (for instance cotton, hemp), there is textile from plastic (acryl, polyamide), there is textile from animal material (for instance wool, silk). Clothes and shoes may contain leather, and rubber (soles), and glue. The clothes may contain pollutions, such as dyes.

The entire sorting process may be executed in one single company, but it is also possible that a first company executes a preselection and that subsequent companies are specialized in further (fine) sorting of a part of the product stream.

The above only gives a global impression of the diversity of materials present in collected clothing. Furthermore, materials are found in collected clothing which actually do not belong there, such as used cleaning cloths including dirt and even waste material. The latter is an unpleasant exponent of the changed mentality in our society: where in the past the used cloth was offered neatly washed and ironed to the collector who came "door to door", nowadays collection containers are standing in many places where one can throw in the cloth anonymously, and where some people also think they should throw in their garbage.

In the end, many streams of material leave the sorting process, wherein the individual streams ideally have almost constant constitutions. The material streams can differ from each other for instance as regards constitution. Each material stream is characterized by a certain economical value and an associated commercial yield in relation to the costs of the sorting process.

Document US-2007/045456 and DE-A-196 12 548 disclose a process involving moulding a part using recycled textile fibres.

WO-A-2009/148302, which is a document falling under Article 54(3) EPC, discloses a method for recycling used clothes and domestic textile wherein the clothes are reduced to dry fibre particles having a size in the order of 0.2 mm or smaller.

It is an important aim of the present invention to further process at least some of the material streams produced in an economically profitable manner. To this end, the invention provides the method according to claim 1.

These and other aspects, features and advantages of the present invention will be further clarified by the following description with reference to the drawings, in which same reference numerals indicate same or similar parts, and in which:

figure 1 schematically illustrates the process streams of a sorting and processing process;
figure 2 schematically illustrates the buffering of different products.

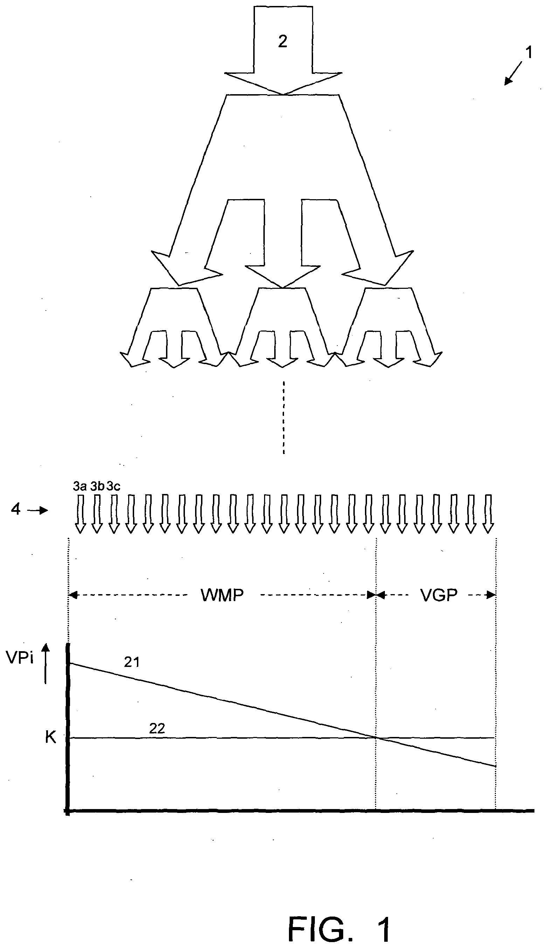

Figure 1 schematically illustrates the process streams of a sorting and processing process 1. Reference numeral 2 illustrates the incoming stream of used clothes. Reference numerals 3a, 3b, 3c etcetera illustrate that the processing process eventually results in an output with many different material streams, which each may be almost uniform in composition. The material streams may mutually differ as regards composition, purity, particle size, etcetera. In practice, the number of material streams obtained in this manner may be larger than 200.

It is noted that sorting and processing processes such as described in the above are known per se, and that the present invention is independent of the sorting and processing process used and can be applied in combination with any known or future sorting and processing process. Therefore, a further explanation of the sorting and processing process is not needed here.

The material in the several resulting or outgoing material streams 3a, 3b, 3c etcetera will hereinafter also be indicated by the phrase "product" 4a, 4b, 4c, etcetera. Whenever the material streams or the product, respectively, is meant in general, the distinctive additions a, b, c, etcetera will be left away.

The product 4 resulting from such sorting and processing process 1 can be used usefully to a lesser or larger extent, and therefore has an economical value which among other things is determined by the measure of usability. For instance, the value of the still useable clothes will be fairly high, but within this category the value of a cashmere sweater that has hardly been worn may be higher than the value of a cotton T-shirt. Further, there may for instance be products 4 that can be used for manufacturing cleaning cloths. In general, the economical value of the products 4 is expressed in price per kilogram (€/kg). Although the economical value of the products 4 also depends on marketing mechanisms such as supply and demand, a stable value is used in the following for calculation. In the following explanation, it will be assumed that the economical value of the products 4 is constant in time. Then, it is possible to sort or classify the products 4 on the basis of economical value. In the following explanation it will be assumed that the economical value of the products 4 decreases in the alphabetic order of the distinguishing additions a, b, c etcetera, in other words product 4a has the highest economical value, product 4b has a value equal to or lower than the value of product 4a, etcetera. In the graph of figure 1, this is illustrated as a down-sloping line corresponding to the several product streams 3a, 3b, 3c, etcetera. For sake of convenience, the down-sloping line 21 is shown as a straight line, but it may be clear that this is only for sake of illustration and in reality the line 21 may have a more unregular course.

The economical value of a certain product 4 is the price that market parties are prepared to pay for the product concerned, in other words the selling price for the producer of the products 4. It is noted that this value may be negative: if there is no demand for a certain product, the product concerned will have to be discharged as waste, and possibly the producer will even have to pay for discharging his waste products.

Furthermore, the entire production process costs money, it is to say the examining sorting, processing, etcetera, but also transport, storage etcetera, and possibly the producer will even have to pay for the clothes 2 received. All this can be expressed in a cost price, also per kilogram (E/kg). In the graph of figure 1, this is indicated as a horizontal line 22.

The total financial yield for the producer can be considered as the summation over all products of the selling price times the respective weight, expressed in a formula as:

$$A = \sum_i VP_i \cdot G_i$$

wherein A represents the total yield,
wherein i is an index indicating the several products,
wherein VPi indicates the selling price for product 4(i),
and wherein Gi indicates the weight of product 4(i).

The total financial costs for the producer can be considered to be the total cost price, expressed in a formula:

$$B = K \cdot G$$

wherein B represents the total costs,
wherein K indicates the cost price per kg,
and wherein G = ΣGi indicates the total weight.

Of course the above calculations may be refined.

For the producer the total process is economically efficient if A > B. Herein all products 4(i) for which applies that the selling price VPi is higher than K contribute to profit: these products will hereinafter also be indicated as profit-making products WMP. Likewise it applies that all products 4(i) for which applies that the selling price VPi is smaller than K reduce the profit; these products will hereinafter also be indicated as loss-making products VGP.

The situation is of course not that the producer can say that in future he no longer wishes to produce the loss-making products VGP. After all, the producer has to wait and see what he receives as input, and then loss-making products simply result. The producer necessarily must accept then that the yield of these products VGP is lower than the cost price or that he even has to pay money for discharging the products as waste.

It is not an aim of the present invention to improve the sorting and processing process resulting in the above described products. Aim of the present invention is to further process at least some of the loss-making products in such a manner that a new useful product emerges with an increased economical value, wherein the increase of the value is higher than the additional costs for the added processing process.

The present invention is among other things based on the insight that the products produced contain the following raw material to a larger or lesser extent:

1] Cellulose. Much textile is made from vegetable material, such as for instance cotton, flax, hemp, which are cellulose-containing materials.
2] Acrylate. Many textiles are made from synthetic fibres, which are almost all manufactured from products or by-products from the oil processing industry. Further, many clothing accessories are manufactured from plastic such as buttons, zippers, etcetera. Many existing plastics are for instance acryl, polypropylene, polyethelene, polyamide, elastomeres. Back to the basis, this always involves acrylate.
3] Rest material. The rest material can be distinguished as follows:

3A] Rest materials which are acceptable in a further processing, or may even be just desirable because of useful properties. The most important example in this category are proteins, which is the basis of clothes or textile on the basis of animal material, such as for instance leather and wool, wherein wool is occurring the most. Proteins give a product a certain extent of biological degradability, which may be desirable.

3B] Rest materials which in a further processing one wishes to exclude as much as possible. This actually concerns all materials not falling in the categories 1], 2] or 3A]. Particularly, this relates to metals (buttons, zippers, etcetera), rubber (for instance soles), glue, elastance (for instance elastic in collars and underwear), dyes, etcetera.

It is noted that the raw materials mentioned above, possibly in mutually different ratios, may be (and usually actually are) present in multiple of the said products. Thus, it is not the case that one product for instance consists of pure polyamide while an other product for instance consists of pure wool.

The present invention now proposes to further process one or more of the loss-making products VGP (and possible even some of the profit-making products WMP with only a small profit margin VP-K, if the value added by the method according to the present invention is higher than the costs of applying the present invention), as follows.

In an optional preparation step, materials which one explicitly does not want to maintain, such as for instance rubber, glue, elastic, may possibly be removed from the product.

In a first processing step, the product is reduced in size. For this purpose, use can be made of processes known per se, such as tearing, breaking, cutting. In the end, dry (fibre) particles result. With present techniques, these fibre particles have sizes in the range from 0.22 mm to 0.9 mm. Generally, it can be stated that smaller particle size is correlated to smaller production capacity; preferably, the reducing step is performed in such a way that the resulting (fibre) particles have sizes in the range from 0.25 mm to 0.8 mm, more preferably sizes in the range from 0.25 mm to 0.6 mm.

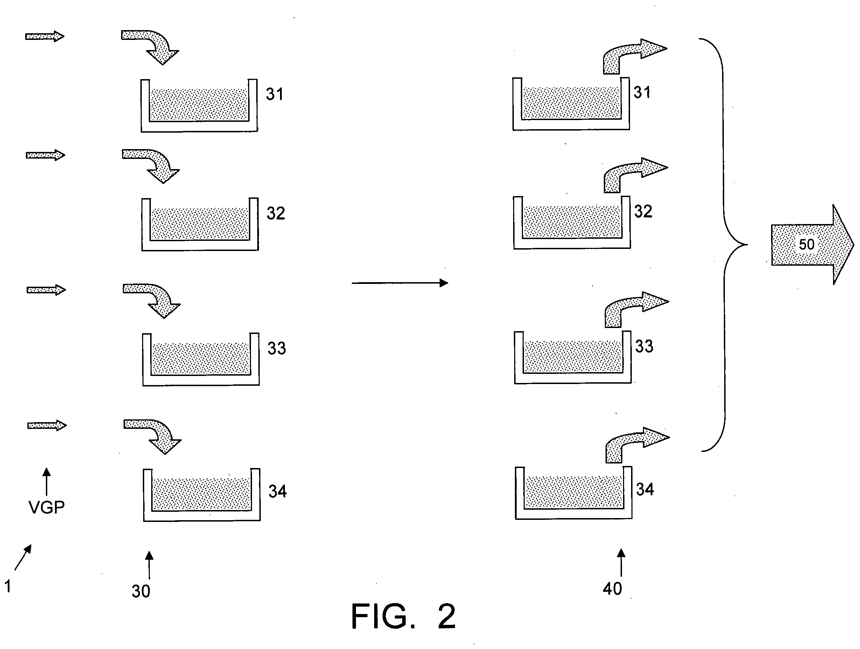

In a second processing step 30 (see figure 2), the product is buffered in one or more buffer containers 31, 32, 33, 34 etcetera. The dry (fibre) particles of each product are buffered individually.

In a third processing step 40 (see figure 2), product is taken out of the buffer containers 31, 32, 33, 34, etc., and dry (fibre) particles from different buffer containers are mixed with each other. The mixing ratio is selected here in such a manner that a mixed product 50 results with a certain desired content of cellulose and a certain desired content of acrylate. For instance, if the content of cellulose of a certain product 4(i) is lower than desired, this can be compensated by mixing with a product 4(j) of which the content of cellulose is higher than desired. In this manner, both the product with insufficient cellulose and the product with too much cellulose can still be used.

It may be clear that the precise relative mixing ratios of the different products will depend on the circumstances, such as the actual contents of cellulose and acrylate per product, the desired total content of cellulose and acrylate which one wishes to obtain in the resulting mixed product 50, etc. Also, the actual extent of pollutions plays a role, in relation to a certain maximum of pollutions that one can accept in the resulting mixed product 50. The precise relative mixing ratios will in general be set by a computer.

In a fourth processing step, the mixed product obtained, which is still in the form of dry (fibre) particles, is mixed with a resin. There is some freedom of choice when choosing the resin to be applied.

The resin is added by bringing it in a liquid condition, that is to say by dissolving it in a suitable solvent. Preferably, in conjunction with environmental requirements, a water-carried resin is applied. The temperature is preferably increased above room temperature, for instance in the range of about 40-50 °C.

Adding the resin in liquid form is preferably done by spraying or vaporizing. The mixed product is placed on a supporting surface, preferably a transporter such as a conveyor belt, in the form of a layer of (fibre) particles. The resin is sprayed or vaporized above that, and the resulting vapour deposits on the particles wherein the layer of particles is humidified. A similar process is known as step in a process for manufacturing MDF plates, so that a more detailed description is omitted here.

The combination of resin and mixed product has a consistency comparable to moist soil, or peanuts humidified with syrup: at a small scale, solid particles can be distinguished, which stick together without being fixed with respect to each other; at a larger scale, sticky lumps are formed, which can be moulded to a desired shape thanks to the mutual displaceability of the solid particles.

In a fifth processing step, this sticky mass is pressed in a desired shape, and is maintained in this shape during a certain time and at a certain temperature and pressure, while the resin is hardening. The used shape may for instance be a plate shape, so that pressed plates are formed. The shape used may for instance also be the shape of a use product. In a special preferred embodiment, the use product is a pallet.

After sufficient hardening and drying, the products formed can be picked up and transported.

It is noted that the said use products produced in the afore-described manner are also suitable to be processed by the process proposed by the present invention, that is to say to be recycled.

Although the present invention is primarily intended to make recycling of used clothes and domestic textile economically more profitable, the method according to the present invention is also suitable for recycling of pallets, both pallets which are made as use product according to the present invention and existing pallets that are for instance made of wood (cellulose) or plastic (acrylate). Hereby, the method also provides a solution for a problem in the transport sector, that pallets, which are commonly used in container transport, must be discarded after use because they are or may be contaminated with poison that is used in the containers for killing vermin during the journey. This method does however not form part of the invention as defined in the claims.

It will be clear to a person skilled in the art that the invention is not limited to the exemplary embodiments discussed in the above but that several variations and modifications are possible within the protective scope of the invention as defined in the attached claims.

In the above, the present invention is described from the perspective of an existing sorting and processing company, wherein this company wishes to increase the value of at least a part of its material stream (output). However, the invention can also be described from the perspective of a new company, buying material streams from an existing sorting and processing company to function as input. Here, the economical value of a material stream translates to a buying price for the new company, with the understanding that this new company can buy selectively and does not necessarily have to buy all material streams. Then, the new company is in fact an "ordinary" production company, buying raw materials in the market, which raw materials in that case do not necessarily have to originate from recycled clothes. Thus, the present invention also relates to a method for manufacturing formed products.

Features which have only been described for a certain embodiment can also be applied in other embodiments described. Features of different embodiments can be combined to obtain other embodiments. Features which have not explicitly been described as being essential can also be left away.

**Claims**

1. Method for recycling used clothes or domestic textile, which method comprises the steps of:

> - receiving an incoming stream of used clothes (2) or domestic textile;
> - examining and sorting the used clothes (2) or domestic textile received and subdividing the used clothes or domestic textile received in a large number of mutually different material streams (3) of mutually different compositions, each material stream (3) being almost uniform in composition;
> - processing the various material streams (3) of mutually different compositions to produce mixed product (50) with a certain desired content of cellulose and a certain desired content of acrylate; the step of processing includes:
>
>> - a first processing step in which the material of each material stream (3) is reduced in size such as to result in dry fibre particles, wherein the dry fibre particles have sizes in the range from 0.22 mm - 0.9 mm, preferably with sizes in the range from 0.25 mm - 0.8 mm, more preferably sizes in the range from 0.25 mm - 0.6 mm:

> = a second processing step (30) in which the dry fibre particles of each material stream are stored in buffer containers (31, 32, 33, 34), wherein the different products in the different buffer containers have mutually different contents of cellulose, acrylate and proteins; and
> = a third processing step (40) in which the dry fibre particles are taken out of the different buffer containers (31, 32, 33, 34) and mixed with each other with a mixing ratio that is selected such that the obtained mixed product (50) has said certain desired content of cellulose and said certain desired content of acrylate;

> mixing the mixed product (50) with a resin in a resulting mass;
> pressing the resulting mass in a desired shape; and
> allowing the mass pressed in shape to harden.

2. Method according to claim 1, wherein the step of reducing is executed by tearing and/or breaking and/or cutting.

**Patentansprüche**

1. Recyclingverfahren für gebrauchte Kleidung oder Heimtextilien, wobei das Verfahren die folgenden Schritte umfasst:

> - Aufnahme eines Eingangsstroms von gebrauchter Kleidung (2) oder Heimtextilien;
> - Sichtung und Sortierung der erhaltenen gebrauchten Kleidung (2) oder Heimtextilien und Unterteilung der erhaltenen gebrauchten Kleidung oder Heimtextilien in eine große Anzahl von voneinander verschiedenen Materialströmen (3) mit voneinander verschiedener Zusammensetzung, wobei jeder Materialstrom (3) nahezu einheitlich in seiner Zusammensetzung ist;
> - Verarbeitung der verschiedenen Materialströme (3) mit voneinander verschiedener Zusammensetzung, um ein Mischprodukt (50) mit einem bestimmten gewünschten Gehalt an Zellulose und einem bestimmten gewünschten Gehalt an Acrylat herzustellen;
> wobei der Schritt der Verarbeitung umfasst:
>
>> - einen ersten Verarbeitungsschritt, in dem das Material jedes Materialstroms (3) in seiner Größe reduziert wird, um beispielsweise bei trockenen Faserpartikeln zu resultieren, wobei die trockenen Faserpartikel Größen aufweisen im Bereich von 0,22 mm - 0,9 mm, vorzugsweise mit Größen im Bereich von 0,25 mm - 0,8 mm, weiter bevorzugt Größen im Bereich von 0,25 mm - 0,6 mm;

- einen zweiten Verarbeitungsschritt (30), in dem die trockenen Faserpartikel jedes Materialstroms in Pufferbehältern (31, 32, 33, 34) gelagert werden, wobei die verschiedenen Produkte in den verschiedenen Pufferbehältern voneinander verschiedene Gehalte an Zellulose, Acrylat und Proteinen haben; und

- einen dritten Verarbeitungsschritt (40), in dem die trockenen Faserpartikel aus den verschiedenen Pufferbehältern (31, 32, 33, 34) genommen und miteinander gemischt werden mit einem Mischungsverhältnis, das so gewählt ist, dass das erhaltene Mischprodukt (50) den bestimmten gewünschten Gehalt an Zellulose und den bestimmten gewünschten Gehalt an Acrylat aufweist;

Mischen des gemischten Produkts (50) mit einem Harz zu einer resultierenden Masse;
Pressen der resultierenden Masse in eine gewünschte Form; und
Aushärten lassen der in Form gepressten Masse.

2. Verfahren nach Anspruch 1, wobei der Schritt des Reduzierens ausgeführt wird durch Reißen und/oder Brechen und/oder Schneiden.

## Revendications

1. Procédé de recyclage de vêtements ou textiles domestiques usagés, lequel procédé comprend les étapes de :

recevoir un flux entrant de vêtements (2) ou textiles domestiques usagés ;
examiner et trier les vêtements (2) ou textiles domestiques usagés et subdiviser les vêtements ou textiles domestiques usagés reçus en un grand nombre de flux de matériaux (3) mutuellement différents de compositions mutuellement différentes, chaque flux de matériaux (3) étant à peu près de composition uniforme ;
traiter les divers flux de matériaux (3) de compositions mutuellement différentes pour produire un produit mélangé (50) avec un certain contenu souhaité de cellulose et un certain contenu souhaité d'acrylate ;
l'étape de traitement inclut :

une première étape de traitement dans laquelle le matériau de chaque flux de matériaux (3) est réduit en taille de façon à donner des particules de fibre sèche, dans lequel les particules de fibre sèche ont des tailles dans la plage de 0,22 mm à 0,9 mm, de préférence avec des tailles dans la plage de 0,25 mm à 0,8 mm, plus préférablement des tailles dans la plage de 0,25 mm à 0,6 mm ;

une seconde étape de traitement (30) dans laquelle les particules de fibre sèche de chaque flux de matériaux sont stockées dans des récipients tampon (31, 32, 33, 34), dans lequel les différents produits dans les différents récipients tampon ont des contenus en cellulose, acrylate et protéines mutuellement différents ; et

une troisième étape de traitement (40) dans laquelle les particules de fibre sèche sont sorties des différents récipients tampon (31, 32, 33, 34) et mélangées ensemble avec un rapport de mélange qui est sélectionné de telle manière que le produit mélangé obtenu (50) a ledit certain contenu souhaité de cellulose et ledit certain contenu souhaité d'acrylate ;

mélanger le produit mélangé (50) avec une résine dans une pâte résultante ;
presser la pâte résultante dans une forme souhaitée ; et
permettre à la pâte pressée en forme de durcir.

2. Procédé selon la revendication 1, dans lequel l'étape de réduction est exécutée par étirage et/ou cassure et/ou découpe.

# FIG. 1

FIG. 2

EP 2 507 023 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007045456 A
- DE 19612548 A
- WO 2009148302 A